# EUROPEAN PATENT SPECIFICATION

(11) **EP 4 446 206 B1**
(45) Date of publication and mention of the grant of the patent: **10.09.2025**
(21) Application number: 23305545.8
(22) Date of filing: 12.04.2023
(51) Int. Cl.: B62H 3/12, B62H 3/08, B60P 3/075, B61D 37/00, B61D 45/00, E04H 6/00

(54) **BICYCLE PARKING DEVICE FOR A VEHICLE**
FAHRRAD-ABSTELLVORRICHTUNG FÜR EIN FAHRZEUG
DISPOSITIF DE STATIONNEMENT DE BICYCLETTE POUR UN VÉHICULE

(43) Date of publication of application: 16.10.2024
(73) Proprietor: SpeedInnov, 75008 Paris (FR)
(72) Inventor: MANDERSCHEID, Thierry, 17000 LA ROCHELLE (FR); DAGDAG, Selim, 65360 MOMERES (FR)
(74) Representative: Plasseraud IP

(56) References cited:
- EP-A1- 1 609 708
- CN-A- 108 505 785
- CN-U- 208 731 115

## Description

The present invention relates to a bicycle parking assembly comprising a bicycle parking device, said bicycle parking device comprising : a column extending along a first axis between a first end and a second end ; and a wheel fixing element, able to slide along the column between a first and a second axial positions, respectively close to the first end and close to the second end.

Such a bicycle parking device is disclosed in documents WO2018104800 and EP1609708. Said EP1609708 discloses a bicycle parking assembly according to the preamble of claim 1.

It is advantageous to provide vehicles with such bicycle parking devices, so as to allow the passengers to travel with their own bicycles.

However, the known bicycle parking devices are bulky and difficult to adapt to vehicles for the transport of passengers.

Moreover, the known bicycle parking devices may be adapted only to a limited range of size/height/weight of bicycles.

Moreover, in the known bicycle parking devices, the bicycles are usually pressed against each other for space gain. Therefore, it may be difficult for a particular user to remove his/her own bicycle among others, or to access a free place surrounded with occupied ones.

The present invention aims to solve the above-mentioned problems.

For this purpose, the invention relates to a bicycle parking assembly corresponding to the features of claim 1.

According to preferred embodiments, the bicycle parking assembly may include one or more of the following features, considered alone or in any technically possible combination:
- the first and second angular positions of the column of the bicycle parking device form a tilt angle comprised between 10° and 35°, preferably comprised between 20° and 35°, the tilt angle corresponding to the angle formed between the receptacle axis in the first angular position and the receptacle axis in the second angular position ;
- the wheel receptacle of the bicycle parking device comprises : a body able to support the second wheel ; and a locking device able to lock the second wheel to the body;
- the bicycle parking assembly comprises a plurality of bicycle parking devices as disclosed above ; wherein the supporting elements of the plurality of bicycle parking devices are coupled with the translation device so that the supporting elements of the plurality of bicycle parking devices are able to translate relative to the translation device along the third axis.

The present invention also relates to a vehicle comprising a floor and a bicycle parking assembly as disclosed above, wherein the translation device comprises a lower element fixed to the floor, a lower end of the supporting element of each of the plurality of bicycle parking devices being coupled with the lower element, so that the supporting elements of the plurality of bicycle parking devices are able to translate relative to the floor along the third axis.

According to a preferred embodiment, the vehicle comprises an inner wall, wherein the translation device comprises an upper element fixed to the inner wall, an upper end of the supporting element of each of the plurality of bicycle parking devices being coupled with the upper element.

The invention will be easier to understand in view of the following description, provided solely as an example, and with reference to the appended drawings, wherein :
- Figure 1 is an schematic, partial front view of a vehicle according to an embodiment of the invention, comprising a bicycle parking device ; and
- Figure 2 is a schematic, partial top view of the vehicle and bicycle parking device of Figure 1.

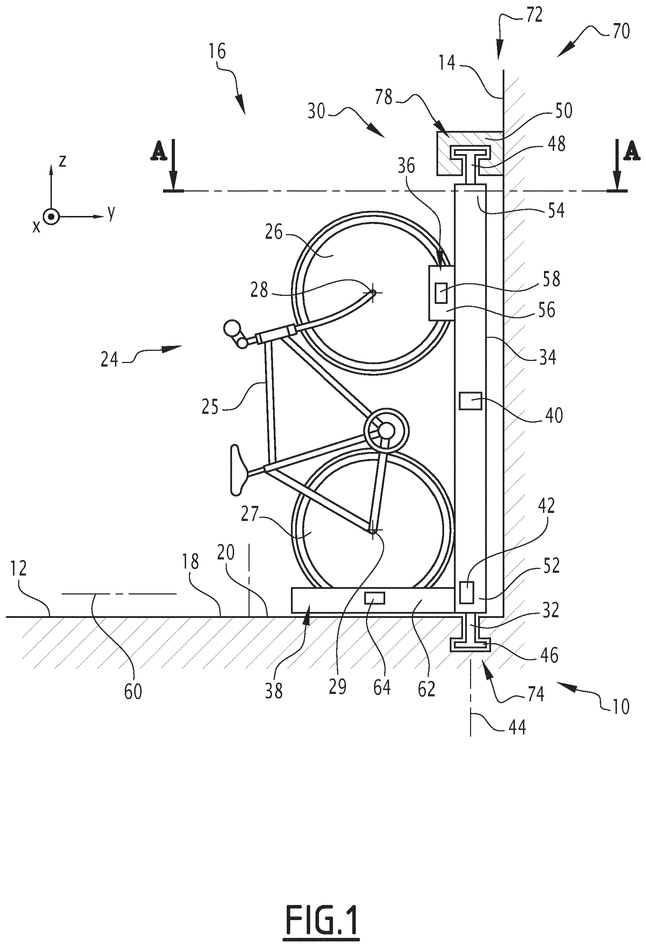

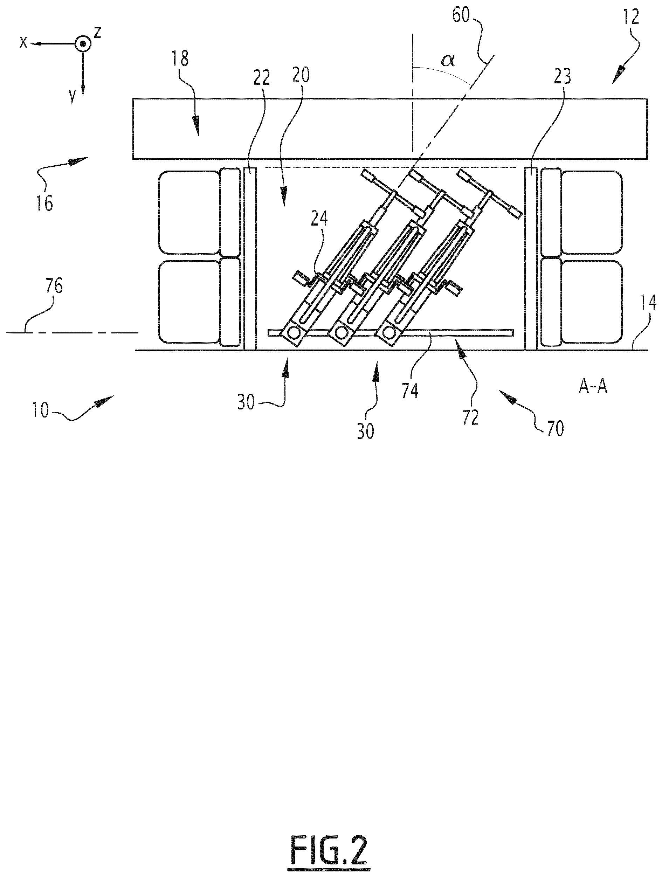

Figures 1 and 2 show a vehicle 10 according to an embodiment of the invention. Preferably, the vehicle 10 is a land vehicle, more preferably a railway vehicle such as a train.

The vehicle 10 comprises a floor 12, and at least one inner wall 14, for example a lateral wall. The floor 12 and the lateral wall 14 define an inner compartment 16 together with a roof (not shown).

In the following description, an orthonormal basis (X, Y, Z), associated with the vehicle 10, is considered. X represents a moving direction, considered horizontal, of the vehicle 10 ; and Z represents the vertical direction. The floor 12 and the inner wall 14 shown on Figures 1 and 2 extend respectively along a (X, Y) plane and along a (X, Z) plane.

The inner compartment 16 comprises : a circulation area 18, extending along X ; and a bicycle parking zone 20. In the embodiment of Figures 1 and 2, the bicycle parking zone 20 is located along Y between the circulation area 18 and the inner wall 14 ; and delimited along X between a first 22 and a second 23 panels.

The bicycle parking zone 20 is configured for accommodating one or more bicycles 24, shown on Figures 1 and 2. A typical bicycle 24 comprises : a frame 25 ; and a first 26 and a second 27 wheels able to rotate relative to the frame 25. The first 26 and the second 27 wheels substantially extend along a same plane and have rotation axes 28, 29 substantially parallel to each other.

The bicycle parking zone 20 comprises at least one bicycle parking device 30. The bicycle parking device 30 comprises : a supporting element 32 ; a column 34 ; a wheel fixing element 36 ; a wheel receptacle 38 ; and a first 40 and a second 42 actuation devices.

The supporting element 32 extends along a vertical main axis 44. A lower end 46 of the supporting element 32 is assembled to the floor 12. In an embodiment (not shown) not included in the scope of the invention, the lower end 46 is fixedly assembled to the floor 12. The embodiment of Figures 1 and 2 will be specifically detailed below.

In the embodiment of Figures 1 and 2, the supporting element 32 is a vertical rod and an upper end 48 of said supporting element 32 is assembled to a cantilever 50 fixed to the inner wall 14. In a preferred embodiment, detailed below, the cantilever 50 is a rail extending along X between the first 22 and second 23 panels.

In another embodiment (not shown), the upper end 48 of the supporting element 32 is assembled to the roof of the inner compartment 16. In another embodiment (not shown), the upper end 48 of the supporting element 32 is a free end.

The column 34 extends along the vertical main axis 44, between a lower end 52 and an upper end 54.

The column 34 is able to rotate around the main axis 44 relative to the supporting element 32. For example, the column 34 is ring-shaped around the supporting element 32.

The column 34 is able to rotate between a first and a second angular positions, shown respectively on Figure 1 and on Figure 2. Preferably, the first and second angular positions form a tilt angle α comprised between 10° and 35°. More preferably, the tilt angle α is comprised between 20° and 35°. In the embodiment of Figures 1 and 2, the tilt angle α is close to 35°.

The first actuation device 40 allows a user to rotate the column 34 between the first and the second angular positions. For example, the first actuation device 40 comprises a gripping element, attached to the column. Preferably, the first actuation device 40 comprises a braking element (not shown) between the column 34 and the supporting element 32, so that the rotation needs an initial force above a selected threshold ; and/or so that the rotation between the first and second angular positions is decomposed in several steps of a same angular pitch.

The wheel fixing element 36 comprises a first body 56 and a first locking device 58.

The first body 56 is able to slide along the column between a lower (not shown) and an upper positions. In the upper position, shown on Figures 1 and 2, the first body 56 is closer to the upper end 54 of the column. In the lower position, the first body 56 is closer to the lower end 52. A suitable sliding mechanism for the first body 56 is disclosed in document WO2018104800, previously cited.

The first locking device 58 is able to lock the first 26 or second 27 wheel of a bicycle in contact with the first body 56. A suitable locking device is disclosed in document WO2018104800, previously cited.

The second actuation device 42 allows a user to move the wheel fixing element 36 between the lower and upper positions. For example, the second actuation device 42 is a lever situated at the bottom of the column 34, as disclosed in document WO2018104800, previously cited.

The wheel receptacle 38 is integral with the lower end 52 of the column and extends from said first end along a receptacle axis 60, perpendicular to the main axis 44.

In the embodiment of Figures 1 and 2, the receptacle axis 60 is horizontal.

As shown in Figure 1, the receptacle axis 60 extends along Y in the first angular position of the column 34.

As shown in Figure 2, the receptacle axis 60 is inclined relative to Y in the second angular position of the column 34.

In particular, the tilt angle α corresponds to the angle between the receptacle axis 60 in the first angular position and the receptacle axis 60 in the second angular position.

The wheel receptacle 38 comprises a second body 62, able to accommodate a wheel 27, 26 of the bicycle 24 when the other wheel 26, 27 is assembled to the wheel fixing element 36 and when said wheel fixing element is in the upper position. Preferably, the second body 62 has a substantially constant section along the receptacle axis 60. For example, the second body 62 has a U-shaped or V-shaped section so as to form a groove, able to receive the wheel 27, 26.

Preferably, a free end of the wheel receptacle 38, opposed to the column 34, is open.

Optionally, the wheel receptacle 38 also comprises a second locking device 64 for locking the wheel in contact with the second body 62.

Preferably, the bicycle parking zone 20 comprises a plurality of bicycle parking devices 30 according to the description above, the main axis 44 of each of said bicycle parking devices 30 extending vertically. Preferably, the bicycle parking devices 30 are substantially identical.

Preferably, the main axes 44 of the plurality of bicycle parking devices 30 are aligned. In the embodiment of Figures 1 and 2, the bicycle parking zone 20 comprises three bicycle parking devices 30, the main axes of said bicycle parking devices being aligned along X.

In an embodiment not included in the scope of the invention (not shown), the lower end of the supporting element of each of the plurality of bicycle parking devices 30 is fixedly assembled to the floor 12.

According to the invention, the bicycle parking zone 20 comprises a bicycle parking assembly 70. The bicycle parking assembly 70 comprises : at least one bicycle parking device 30 according to the description above ; and a translation device 72.

The translation device 72 is fixed to the floor 12 and/or inner wall 14 and/or roof (not shown) of the inner compartment 16.

Preferably, the translation device 72 comprises at least a lower element 74 fixed relative to the floor 12 and extending along a translation axis 76 parallel to X. In the embodiment of Figures 1 and 2, the lower element 74 extends between the first 22 and second 23 panels.

As shown on Figure 1, the lower element 74 is for example a lower rail carved into the floor 12.

The lower end 46 of the supporting element is slidably coupled to the lower element 74, so that the supporting element 32 is able to translate along the translation axis 76 relative to the translation device.

In the embodiment of Figures 1 and 2, the translation device 72 also comprises an upper element 78 such as an upper rail, fixed to the cantilever 50 and extending along X between the first 22 and second 23 panels. The upper end 48 of the supporting element is slidably coupled to the upper element 78.

In the embodiment of Figures 1 and 2, the bicycle parking zone 20 comprises a plurality of bicycle parking devices 30 according to the description above. The supporting element 32 of each of said bicycle parking devices 30 is slidably coupled to the translation device 72, so that each supporting element 32 is able to translate along the translation axis 76 relative to the translation device 72.

A method for implementing the bicycle parking device 30 and bicycle parking zone 20 will now be described.

A user enters the inner compartment 16 together with a bicycle 24 and moves on the circulation area 18 so as to face the bicycle parking zone 20. The user places the bicycle 24, or at least the first wheel 26, aligned along Y with an unoccupied bicycle parking device 30 ; so that the first wheel 26 faces the column 34 and so that the rotation axis 28of at least the first wheel is parallel to X.

If necessary, the user actuates the first actuation device 40 so as to place the column 34 in the first angular position ; and/or the user actuates the second actuation device 42 so as to place the wheel fixing element 36 in the lower position.

Then, the user places the first wheel 26 on the wheel receptacle 38, in lateral contact with the first body 56 of the wheel fixing element 36 ; and actuates the first locking device 58, so as to fix the first wheel 26 to the first body 56.

Then, the user actuates the second actuation device 42 so as to place the wheel fixing element 36 in the upper position. In a particular embodiment, the second actuation device 42 is actuated by pushing the bicycle against the wheel fixing element. The vertical movement of the wheel fixing element 36 drives the second wheel 27 into the wheel receptacle 38, in contact with the second body 62.

Optionally, the user then actuates the second locking device 64 so as to fix the second wheel 27 to the second body 62.

The bicycle parking device 30 and the bicycle 24, assembled to each other, are then in the configuration shown on Figure 1. A part of the bicycle 24 protrudes from the bicycle parking zone 20 on the circulation area 18, which may hamper the circulation of the passengers in the inner compartment 16.

Then, the user actuates the first actuation device 40, so as to place the column 34 in the second angular position of Figure 2. The receptacle axis 60 is thus inclined relative to Y and the bicycle 24 is entirely located in the bicycle parking zone 20, between the first 22 and second 23 panels. The circulation area 18 is not obstructed by the bicycle.

The reverse method is carried out by the user in order to remove the bicycle 24 from the bicycle parking device 30.

If the bicycle parking zone 20 comprises several bicycle parking devices 30, some of them being already occupied by a bicycle, the user may place each column 34 in the first angular position. A better access is thus provided to an unoccupied bicycle parking device 30.

As the bicycle parking zone 20 comprises a bicycle parking assembly 70 with a translation device 72, the user may translate the bicycle parking devices 30 along the translation axis 76 for a better access to an unoccupied bicycle parking device.

Therefore, each of the bicycle parking devices 30 is easily accessible to a user, even if the adjacent bicycle parking devices are already occupied with a bicycle ; and when the columns 34 are in the second angular positions, the bicycles do not obstruct the circulation in the inner compartment 16.

The bicycle parking devices 30 is adapted to a wide range of size/height/weight of bicycles 24. In particular, the bicycle parking devices 30 is adapted to electric bikes.

## Claims

1. A bicycle parking assembly (70) comprising a bicycle parking device (30), said bicycle parking device (30) comprising :
- a column (34) extending along a main axis (44) between a lower end (52) and an upper end (54); and
- a wheel fixing element (36), able to slide along the column between a first and a second axial positions, respectively close to the lower end and close to the upper end;
the bicycle parking device (30) also comprising:
- a supporting element (32), the column (34) being able to rotate relative to said supporting element (32) around the main axis (44), between a first and a second angular positions ; and
- a wheel receptacle (38), integral with the lower end (52) of the column (34) and extending from said lower end (52) along a receptacle axis (60), perpendicular to the main axis (44) ;
the bicycle parking device (30) being configured so as to receive a bicycle (24) with a frame (25) and a first (26) and a second (27) wheels, the first wheel (26) being fixed to the wheel fixing element (36) in the second axial position, the second wheel (27) being in contact with the wheel receptacle (38), so that the bicycle (24) is able to rotate relative to the supporting element (32), together with the column (34) ;
the bicycle parking assembly (70) being **characterized in that** it also comprises a translation device (72) coupled with the supporting element (32) of the bicycle parking device (30), so that the supporting element (32) is able to translate relative to the translation device (72), along a translation axis (76) substantially perpendicular to the main axis (44).

2. The bicycle parking assembly (70) according to claim 1, wherein the first and second angular positions of the column (34) of the bicycle parking device (30) form a tilt angle (α) comprised between 10° and 35°, preferably comprised between 20° and 35°, the tilt angle (α) corresponding to the angle formed between the receptacle axis (60) in the first angular position and the receptacle axis (60) in the second angular position.

3. The bicycle parking assembly (70) according to claim 1 or 2, wherein the wheel receptacle (38) of the bicycle parking device (30) comprises : a second body (62) able to support the second wheel (27) ; and a second locking device (64) able to lock the second wheel (27) to the second body (62).

4. The bicycle parking assembly (70) according to one of the previous claims, comprising a plurality of said
bicycle parking devices (30) ; wherein the supporting elements (32) of the plurality of bicycle parking devices are coupled with the translation device (72), so that the supporting element (32) of each of the bicycle parking devices (30) is able to translate relative to the translation device (72) along the translation axis (76).

5. A vehicle (10) comprising a floor (12) and a bicycle parking assembly (70) according to claim 4, wherein the translation device (72) comprises a lower element (74) fixed relative to the floor (12), a lower end (46) of the supporting element (32) of each of the plurality of bicycle parking devices (30) being coupled with the lower element (74) of the translation device (72), so that the supporting elements (32) of the plurality of bicycle parking devices (30) are able to translate relative to the floor (12) along the translation axis (76).

6. The vehicle (10) according to claim 5, comprising an inner wall (14), wherein the translation device (72) comprises an upper element (78) fixed to the inner wall (14), an upper end (48) of the supporting element (32) of each of the plurality of bicycle parking devices (30) being coupled with the upper element (78) of the translation device (72).

## Patentansprüche

1. Fahrrad-Abstellanordnung (70), umfassend eine Fahrrad-Abstellvorrichtung (30), wobei die Fahrrad-Abstellvorrichtung (30) umfasst:
- eine Säule (34), welche sich entlang einer Hauptachse (44) zwischen einem unteren Ende (52) und einem oberen Ende (54) erstreckt; und
- ein Rad-Fixierelement (36), welches dazu in der Lage ist, entlang der Säule zwischen einer ersten und einer zweiten axialen Position zu schieben, welche nahe zu dem unteren Ende bzw. nahe zu dem oberen Ende sind;
wobei die Fahrrad-Abstellvorrichtung (30) ebenso umfasst:
- ein Halterungselement (32), wobei die Säule (34) dazu in der Lage ist, relativ zu dem Halterungselement (32) zwischen einer ersten und einer zweiten Winkelposition um die Hauptachse (44) zu rotieren; und
- eine Radaufnahme (38), welche integral mit dem unteren Ende (52) der Säule (34) ist und sich von dem unteren Ende (52) entlang einer Aufnahmeachse (60) erstreckt, welche senkrecht zu der Hauptachse (44) ist;
wobei die Fahrrad-Abstellvorrichtung (30) derart eingerichtet ist, dass sie ein Fahrrad (24) mit einem Rahmen (25) und einem ersten (26) sowie einem zweiten (27) Rad aufnimmt, wobei das erste Rad (26) in der zweiten axialen Position an dem Rad-Fixierelement (36) fixiert ist, wobei das zweite Rad (27) in Kontakt mit der Radaufnahme (38) ist, so dass das Fahrrad (24) dazu in der Lage ist, zusammen mit der Säule (34) relativ zu dem Halterungselement (32) zu rotieren;
wobei die Fahrrad-Abstellanordnung (70) **dadurch gekennzeichnet ist, dass** sie ebenso eine Übertragungsvorrichtung (72) umfasst, welche mit dem Halterungselement (32) der Fahrrad-Abstellvorrichtung (30) gekoppelt ist, so dass das Halterungselement (32) dazu in der Lage ist, relativ zu der Übertragungsvorrichtung (72) entlang einer Übertragungsachse (76) zu übertragen, welche im Wesentlichen senkrecht zu der Hauptachse (44) ist.

2. Fahrrad-Abstellanordnung (70) nach Anspruch 1, wobei die erste und zweite Winkelposition der Säule (34) der Fahrrad-Abstellvorrichtung (30) einen Neigungswinkel (α) bilden, welcher zwischen 10° und 35° umfasst ist, vorzugsweise zwischen 20° und 35° umfasst ist, wobei der Neigungswinkel (α) dem Winkel entspricht, welcher zwischen der Aufnahmeachse (60) in der ersten Winkelposition und der Aufnahmeachse (60) in der zweiten Winkelposition gebildet ist.

3. Fahrrad-Abstellanordnung (70) nach Anspruch 1 oder 2, wobei die Radaufnahme (38) der Fahrrad-Abstellvorrichtung (30) umfasst: einen zweiten Körper (62), welcher dazu in der Lage ist, das zweite Rad (27) zu haltern; und eine zweite Verriegelungsvorrichtung (64), welche dazu in der Lage ist, das zweite Rad (27) an dem zweiten Körper (62) zu verriegeln.

4. Fahrrad-Abstellanordnung (70) nach einem der vorhergehenden Ansprüche, umfassend eine Mehrzahl der Fahrrad-Abstellvorrichtungen (30); wobei die Halterungselemente (32) der Mehrzahl von Fahrrad-Abstellvorrichtungen mit der Übertragungsvorrichtung (72) gekoppelt sind, so dass das Halterungselement (32) jeder der Fahrrad-Abstellvorrichtungen (30) dazu in der Lage ist, relativ zu der Übertragungsvorrichtung (72) entlang der Übertragungsachse (76) zu übertragen.

5. Fahrzeug (10), umfassend einen Boden (12) und eine Fahrrad-Abstellanordnung (70) nach Anspruch 4, wobei die Übertragungsvorrichtung (72) ein unteres Element (74) umfasst, welches relativ zu dem Boden (12) fixiert ist, wobei ein unteres Ende (46) des Halterungselements (32) jeder der Mehrzahl von Fahrrad-Abstellvorrichtungen (30) mit dem unteren Element (74) der Übertragungsvorrichtung (72) gekoppelt ist, so dass die Halterungselemente (32) der Mehrzahl von Fahrrad-Abstellvorrichtungen (30) dazu in der Lage sind, relativ zu dem Boden (12) entlang der Übertragungsachse (76) zu übertragen.

6. Fahrzeug (10) nach Anspruch 5, umfassend eine innere Wand (14), wobei die Übertragungsvorrichtung (72) ein oberes Element (78) umfasst, welches an der inneren Wand (14) fixiert ist, wobei ein oberes Ende (48) des Halterungselements (32) jeder der Mehrzahl von Fahrrad-Abstellvorrichtungen (30) mit dem oberen Element (78) der Übertragungsvorrichtung (72) gekoppelt ist.

## Revendications

1. Ensemble de stationnement de vélo (70) comprenant un dispositif de stationnement de vélo (30), ledit dispositif de stationnement de vélo (30) comprenant :
- une colonne (34) s'étendant le long d'un axe principal (44) entre une extrémité inférieure (52) et une extrémité supérieure (54) ; et
- un élément de fixation de roue (36), apte à coulisser le long de la colonne entre une première et une seconde positions axiales, respectivement proche de l'extrémité inférieure et proche de l'extrémité supérieure ;
le dispositif de stationnement de vélo (30) comprenant également :
- un élément d'appui (32), la colonne (34) étant apte à tourner par rapport audit élément d'appui (32) autour de l'axe principal (44), entre une première et une seconde positions angulaires ; et
- un réceptacle de roue (38), solidaire de l'extrémité inférieure (52) de la colonne (34) et s'étendant à partir de ladite extrémité inférieure (52) le long d'un axe de réceptacle (60), perpendiculaire à l'axe principal (44) ;
le dispositif de stationnement de vélo (30) étant configuré pour recevoir un vélo (24) avec un cadre (25) et une première (26) et une seconde (27) roues, la première roue (26) étant fixée à l'élément de fixation de roue (36) dans la seconde position axiale, la seconde roue (27) étant en contact avec le réceptacle de roue (38), de sorte que le vélo (24) soit apte à tourner par rapport à l'élément d'appui (32), conjointement avec la colonne (34) ;
l'ensemble de stationnement de vélo (70) étant **caractérisé en ce qu'**il comprend également un dispositif de translation (72) couplé à l'élément d'appui (32) du dispositif de stationnement de vélo (30), de sorte que l'élément d'appui (32) soit apte à se déplacer par rapport au dispositif de translation (72), le long d'un axe de translation (76) sensiblement perpendiculaire à l'axe principal (44).

2. Ensemble de stationnement de vélo (70) selon la revendication 1, dans lequel les première et seconde positions angulaires de la colonne (34) du dispositif de stationnement de vélo (30) forment un angle d'inclinaison (α) compris entre 10° et 35°, de préférence compris entre 20° et 35°, l'angle d'inclinaison (α) correspondant à l'angle formé entre l'axe de réceptacle (60) dans la première position angulaire et l'axe de réceptacle (60) dans la seconde position angulaire.

3. Ensemble de stationnement de vélo (70) selon la revendication 1 ou 2, dans lequel le réceptacle de roue (38) du dispositif de stationnement de vélo (30) comprend : un second corps (62) apte à supporter la seconde roue (27) ; et un second dispositif de verrouillage (64) apte à verrouiller la seconde roue (27) sur le second corps (62).

4. Ensemble de stationnement de vélo (70) selon l'une des revendications précédentes, comprenant une pluralité desdits dispositifs de stationnement de vélo (30) ; dans lequel les éléments d'appui (32) de la pluralité de dispositifs de stationnement de vélo sont couplés au dispositif de translation (72), de sorte que l'élément d'appui (32) de chacun des dispositifs de stationnement de vélo (30) soit apte à se déplacer par rapport au dispositif de translation (72) le long de l'axe de translation (76).

5. Véhicule (10) comprenant un plancher (12) et un ensemble de stationnement de vélos (70) selon la revendication 4, dans lequel le dispositif de translation (72) comprend un élément inférieur (74) fixe par rapport au plancher (12), une extrémité inférieure (46) de l'élément d'appui (32) de chacun de la pluralité de dispositifs de stationnement de vélos (30) étant couplée à l'élément inférieur (74) du dispositif de translation (72), de sorte que les éléments d'appui (32) de la pluralité de dispositifs de stationnement de vélos (30) soient aptes à translater par rapport au plancher (12) le long de l'axe de translation (76).

6. Véhicule (10) selon la revendication 5, comprenant une paroi intérieure (14), dans lequel le dispositif de translation (72) comprend un élément supérieur (78) fixé à la paroi intérieure (14), une extrémité supérieure (48) de l'élément d'appui (32) de chacun de la pluralité de dispositifs de stationnement de vélo (30) étant couplée à l'élément supérieur (78) du dispositif de translation (72).
